# EUROPÄISCHE PATENTSCHRIFT

(11) **EP 2 537 579 B1**
(45) Veröffentlichungstag und Bekanntmachung des Hinweises auf die Patenterteilung: **06.04.2016**
(21) Anmeldenummer: 12170852.3
(22) Anmeldetag: 05.06.2012
(51) Int. Cl.: B01J 12/00, C01B 33/107, B01J 19/02, F24H 3/00

(54) **Vorrichtung und Verfahren zur Temperaturbehandlung von korrosiven Gasen**
Device and method for the thermal treatment of corrosive gases
Dispositif et procédé de traitement de température de gaz corrosifs

(30) Priorität: 22.06.2011 DE 102011077970
(43) Veröffentlichungstag der Anmeldung: 26.12.2012
(73) Patentinhaber: Wacker Chemie AG, 81737 München (DE)
(72) Erfinder: Ellinger, Norbert, 84389 Postmünster (DE); Wiesbauer, Josef, 5280 Braunau (AT); Ring, Robert, 84533 Haiming (DE)
(74) Vertreter: Potten, Holger

(56) Entgegenhaltungen:
- DE-A1- 2 928 456
- DE-A1- 3 024 320
- US-A1- 2010 040 803
- US-A1- 2010 041 215
- US-A1- 2010 215 562

## Beschreibung

Gegenstand der Erfindung ist ein Verfahren sowie eine Vorrichtung zur Temperaturbehandlung von korrosiven Gasen.

Im Besonderen betrifft die Erfindung chemische Reaktoren, die eine Reaktorkammer umfassen, in der die Reaktionsgase mittels Heizelementen oder Gruppen von Heizelementen auf eine Reaktionstemperatur aufgeheizt werden, wobei die Heizelemente durch direkten Stromdurchgang beheizt werden.

Dazu sind die Heizelemente aus einem elektrisch leitfähigen Material gefertigt und an eine Stromversorgung angeschlossen.

DE 3024320 A1 offenbart eine Vorrichtung zur Hochtemperaturbehandlung von Siliciumverbindungen in der Dampfphase, bestehend aus einem wärmeisolierten Gehäuse mit Gaseinlass- und Gasauslassöffnungen sowie zwischen diesen Öffnungen angeordneten, durch direkten Stromdurchgang beheizten inerten Widerstandsheizern. Die Aufheizung der elektrisch leitenden Widerstandskörper erfolgt vorzugsweise durch Sternschaltung in einem symmetrischen Mehrphasenwechselstromsystem. Dabei lassen sich die einzelnen Heizergruppen unterschiedlich zueinander regeln, also unterschiedlich durch elektrischen Stromdurchgang beheizen.

Die Konvertierung von Siliciumtetrachlorid mit Wasserstoff zu Trichlorsilan findet üblicherweise in einem Reaktor bei hohen Temperaturen statt, bei wenigstens 300°C, idealer weise bei wenigstens 850°C sowie bei einem Druck von 0-50barü idealer weise bei 14-21barü statt.

Wie in DE 3024320 A1 dargelegt werden diese Reaktoren oft durch elektrische Heizelemente aus Graphit, CFC, Siliziumcarbid oder ähnliche Werkstoffe beheizt.

Zu diesem Zweck wird elektrischer Strom direkt durch die elektrisch leitfähigen Heizelemente geleitet und die elektrische Energie wird im Heizelement durch den elektrischen Widerstand in Wärme umgewandelt.

DE 3024320 A1 zufolge werden auch Wärmetauscher innerhalb der Reaktordruckhülle eingesetzt. Die Wärmetauschereinheit kann beispielsweise aus einem Satz elektrisch unbeheizter Graphitrohre, die als Gasableitung dienen, welche außen im Gegenstromprinzip von Frischgas umströmt werden, bestehen.

In DE 10 2005 005 044 A1 wird ein Verfahren zur Konvertierung von Siliciumtetrachlorid zu Trichlorsilan beschrieben, bei dem die Abkühlrate des Prozessgases im Wärmetauscher kontrolliert wird. Für die Wärmetauscher werden bevorzugt Materialien wie Siliciumkarbid, Siliciumnitrid, Quarzglas, Graphit oder mit Siliciumcarbid geschichteter Graphit verwendet.
Des Weiteren können auch andere Gaslenkungselemente, z.B. zylindrische Umlenkeinrichtungen, innerhalb des Reaktors vorhanden sein.

Diese Reaktoreinbauteile bestehen wegen der chemischen Beständigkeit meist aus kohlenstoffhaltigen Werkstoffen, wie Graphit, Siliziumcarbid, CFC und allen anderen kohlenstoffhaltigen Hochtemperaturwerkstoffen und Verbundwerkstoffen.

In DE 10 2010 029 496 A1 wird ein Verfahren zur Energieversorgung einer Last in einem Abscheidungsprozess offenbart, bei welchem mindestens eine erste und eine zweite elektrische Größe mittels eines ersten und eines zweiten steuerbaren elektrischen Schaltmittels bereitgestellt werden, wobei sich die elektrischen Größen in ihren Beträgen unterscheiden und alternativ die erste oder die zweite elektrische Größe zur Last zuschaltbar ist, dadurch gekennzeichnet, dass die Energieversorgung in Zyklen mit einer vorgegebenen Zeitdauer T0 erfolgt, wobei jeder Zyklus eine festgelegte Anzahl n von ganzen Schwingungen der Grundfrequenz f der Versorgungsspannungen umfasst, dass für eine erste Teilanzahl n1 die erste elektrische Größe und für eine zweite Teilanzahl n2 die zweite elektrische Größe zur Energieversorgung der Last durchgeschaltet wird.

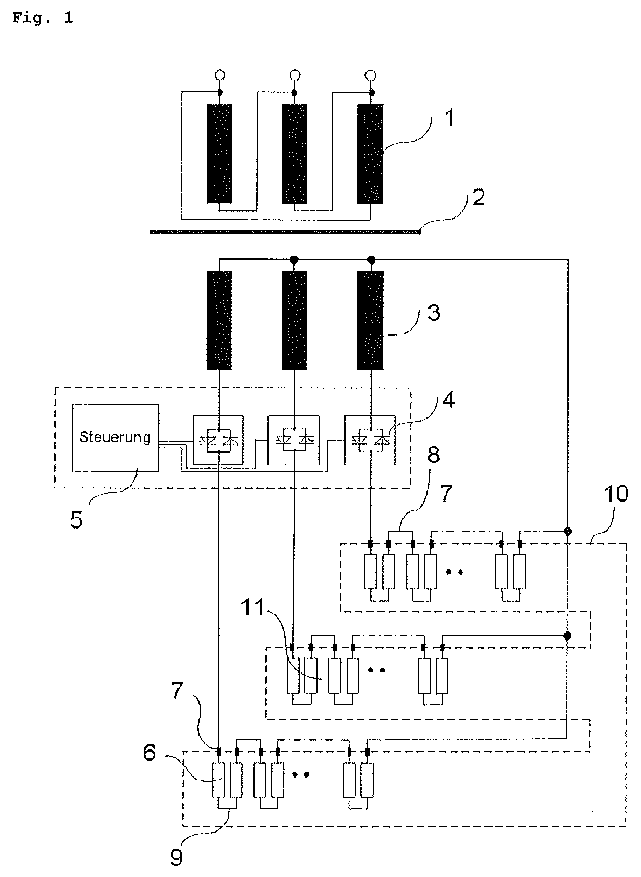

**Fig. 1** zeigt eine herkömmliche Vorrichtung zur Stromversorgung der Heizelemente, wie sie auch in R. Jäger "Leistungselektronik Grundlagen and Anwendungen (VDE-Verlag GmbH Berlin, Auflage 2, 1980, ISBN: 3-8007-1114-1) beschrieben wird.

### Liste der in Fig. 1 verwendeten Bezugszeichen

- **1**: Versorgungsnetz/Primärwicklung
- **2**: Transformatoreisenkern mit galvanisch getrennten Wicklungen
- **3**: Sekundärwicklung
- **4**: Phasenanschnittsteuerung
- **5**: Steuergerät
- **6**: el. Widerstandsheizelemente
- **7**: Elektrode zur Verbindung mit den Heizelementen
- **8**: externe Brücke zur Reihenschaltung von mehreren Heizelementen
- **9**: interne Brücke zur Reihenschaltung zwischen zwei Heizelementen
- **10**: Behälterwand
- **11**: Gruppe von Heizelementen

Über das Versorgungsnetz/Primärwicklung 1 wird elektrische Energie auf drei Phasen über einen Eisenkern 2 galvanisch getrennt auf die Sekundärwicklung eines Transformators induziert.

Jede Phase der Sekundärwicklung kann getrennt voneinander über eine Phasenanschnittsteuerung **4 und 5** geregelt werden. Die jeweiligen Phasen sind verbunden mit den Heizergruppen der jeweiligen Phasen.

Die einzelnen Heizelemente **6** werden meist als Stab, Latte, Rohr, Kantrohr oder als Heizelement mit sternförmigem Heizerquerschnitt ausgeführt. Die leichte Bearbeitbarkeit speziell reiner Kohlenstoffwerkstoffe lassen hier nahezu alle denkbaren Formen zu. Denkbar sind auch mäanderförmige Platten oder Zylindersegmente.

Um die Heizeroberfläche (Wärmeübergangsfläche bzw. Abstrahlfläche) möglichst groß und die spezifische Heizleistung/Flächeneinheit möglichst klein einzustellen, wird der Reaktor meist mit drei Heizelementen oder drei Gruppen von Heizelementen **11** ausgeführt, um das elektrische Versorgungsnetz möglichst symmetrisch zu belasten.

Die geraden Heizelemente **6,** Stab, Latte, Rohr usw. werden dabei auf einer Seite zu einem benachbarten Heizelement elektrisch mit einer Brücke verbunden **9,** wodurch Heizelemente in U-Form entstehen.

Auf der gegenüberliegenden Seite der Heizelemente erfolgt der Anschluss an die elektrische Stromversorgung über elektrisch gut leitfähige Metallelektroden 7, die den Kontakt zur elektrischen Energiequelle und gleichzeitig die Druckdurchführung durch den Reaktorbehälter darstellen.

Außerhalb oder auch innerhalb des Reaktors werden mehrere Heizelemente elektrisch in Reihe geschaltet **8,** sodass (a) die Anzahl der Stromzuführungen möglichst gering, (b) die elektrische Versorgungsspannung hoch und (c) die zuzuführende Stromstärke wiederum möglichst gering wird.

Diese drei Parameter reduzieren üblicherweise den Anschaffungspreis für die benötigte regelbare Stromversorgung.

Ideal in Bezug auf die Stromversorgungs- und Verdrahtungskosten ist eine Anordnung mit drei Stromzuführungen und drei Elektrodendurchführungen von der Stromversorgung zum Reaktor.

Dies setzt jedoch die Reihenschaltung aller Heizelemente einer Phase und die Sternschaltung dieser drei Reihenschaltungen im Reaktor voraus.

DE 29 28 456 A1 offenbart durch elektrischen Stromdurchgang beheizte Trägerkörpergruppen aus Silicium in einem Siemensreaktor zur Abscheidung von hochreinem Silicium, die zumindest anfangs in Parallelschaltung angeordnet sind, wobei die Gleichheit des Stroms in den parallel geschalteten Trägerkörpergruppen durch das Zwischenschalten von Stromteilerdrosseln in die aufgefächerten Parallelstromkreise realisiert wird. Nach Zünden der Trägerkörper und dem damit verbundenen Abfall der Spannung werden die Trägerkörpergruppen von Parallel- auf Serienschaltung umgeschaltet.
Wegen der sich daraus ergebenden hohen Spannung wird temporär eine Parallelschaltung erzeugt, die im Verlaufe des Prozesses so bald als möglich wieder auf Serienschaltung und damit max. mögliche Spannung und gleichen Strom durch alle Heizelemente umstellt.

Auch DE 20 2004 014 812 U1 und DE 20 2004 004 655 U1 offenbaren entsprechende Schaltungsanordnungen.

Ein erheblicher Nachteil aller im Stand der Technik angegebenen Anordnungen besteht darin, dass viele Heizelemente zu großen Gruppen von Heizelemente in Reihe geschaltet werden. Einzelne Heizelemente können wegen des chemisch reaktiven Umfeldes entweder ausfallen oder beschädigt werden, was zur Folge hat, dass die gesamte zugehörige Gruppe von Heizelementen ausfällt. Auch wenn nur ein Heizelement beschädigt ist und der Widerstand dieses Heizelementes ansteigt, führt dies oftmals automatisch dazu, dass die Leistung an der schadhaften Stelle zusätzlich ansteigt und sich somit die Temperatur an der schadhaften Stelle erhöht, was eine weitere Schädigung zusätzlich begünstigt. Jeder kleine Schaden führt also in der Regel unweigerlich zu einem größeren Schaden und letztendlich zu der Notwendigkeit, den Reaktor vorzeitig abzuschalten, was die Wirtschaftlichkeit des Prozesses drastisch reduziert.

Ferner hat es sich gezeigt, dass offenbar die Heizelemente einer sehr aggressiven Atmosphäre ausgesetzt sind, die bei hohen Temperaturen, wie sie bei Heizelementen naturgemäß gegeben ist, noch aggressiver auf diese Bauteile wirkt, weshalb zum Beispiel auch der Materialauswahl für diese Vorrichtungen große Bedeutung zukommt.

Wie sich experimentell gezeigt hat, können sich durch bereits geringe Widerstandsabweichungen entlang der Heizelemente, die auch material- oder herstellungsbedingt sein können, Temperaturabweichungen im Reaktor ergeben, die wiederum zu noch stärkeren Widerstandsabweichungen der Heizelemente führen.

Diese Mitkopplung führt mittelfristig lokal zu einem Heizelementversagen, durch chemischen Angriff oder auch durch Überlastung des Materials durch die ständig steigende Energieabgabe pro Flächeneinheit.

In den meisten Fällen führt dies zu einem Reaktorstillstand verbunden mit hohen Rüstzeiten und erheblichen Kosten für neue Heizelemente.

Ein weiterer Nachteil bei dieser üblichen Anordnung ist auch die hohe Wahrscheinlichkeit von Erdschlüssen.

Durch den chemischen Angriff aller kohlenstoffhaltigen Bauelemente kommt es zu Kohlenstoffablagerungen, die elektrisch leitfähig sind und dadurch zu Erdschlüssen des elektrischen Energienetzes führen.

Darüber hinaus kann es durch den chemischen Angriff auch zu Bauteilversagen der inneren Aufbauten kommen, hier kommt es dann zu Abplatzungen oder Absplitterungen von Kleinteilen, die wiederum zu Erdschlüssen führen können.

Das Problem bei den Erdschlüssen ist die Tatsache, dass sie nicht von Schäden der elektrischen Durchführung und der Elektrodendichtungen unterschieden werden können.

Bei Schäden an der elektrischen Durchführung und auch an der Elektrodendichtung müssen die Stromversorgung und der Reaktor außer Betrieb genommen werden, da es durch anhaltenden Betrieb zu Undichtigkeit bzw. Reaktionsgasaustritt kommen kann, welcher in jedem Fall verhindert werden muss.

Reaktoren für die Hydrierung von Siliciumtetrachlorid mit Wasserstoff müssen also hohen Temperaturen und der korrosiven Natur von Materialien wie Chlorsilanen und Chlorwasserstoffgas, das während des Hydrierungsverfahrens gebildet wird, widerstehen können. Daher werden typischerweise Materialien auf Kohlenstoffbasis, einschließlich Kohlenstoff, Graphit, Kohlenstofffaser-Verbundmaterialien und dergleichen, innerhalb des Reaktors verwendet. Nachteil der kohlenstoffhaltigen Werkstoffe ist eine geringe verbleibende chemische Reaktion des Kohlenstoffes mit dem Edukt Wasserstoff bzw. der auch präsenten Chlorwasserstoffsäure, die zu einer begrenzten Heizelementlebensdauer führt.

Bei hohen Temperaturen reagiert Graphit mit Wasserstoff zu Methan (= Methanisierung). Dies führt zu strukturellen Defekten des Reaktors und schließlich zu Reaktorausfällen und einer Reduktion der Standzeit. Da defekte Teile ausgetauscht und neue Teile montiert werden müssen, ist dies auch mit einem erheblichen finanziellen Aufwand verbunden.

Die Methanisierung tritt insbesondere an den Heizern auf, die direkt mit Wasserstoff und Siliciumtetrachlorid in Berührung kommen. Daneben können auch die Gegenstromwärmetauscher insbesondere im Bereich höherer Temperaturen, insbesondere im Bereich der Abgase, durch die Reaktion von Wasserstoff und Graphit zu Methan geschädigt werden. Besonders aus Graphit gefertigte Heizelemente zeigen die größte Korrosionsanfälligkeit, da hier Wasserstoff (vermischt mit Siliciumtetrachlorid) auf sehr heiße Oberflächen trifft.

Im Stand der Technik wurden Anstrengungen unternommen, die verwendeten Graphitteile mit geeigneten Materialien zu beschichten, um zu erreichen, dass Wasserstoff nicht mehr oder nur vermindert mit den Bauteilen reagieren kann.

In DE 10 2005 046 703 A1 wird beispielsweise vorgeschlagen, die Oberfläche der Reaktionskammer und die Oberfläche des Heizelements vor der Hydrierung des Chlorsilans in-situ mit Siliciumkarbid zu beschichten und so eine Methanisierung dieser Bauteile zu verringern. Dieser Schritt der Beschichtung mit Siliciumkarbid findet bei einer Temperatur von mindestens 1000°C statt.

Dennoch ist auch bei beschichteten Graphitteilen stets noch eine Methanisierung und eine damit einhergehende Korrosion zu erwarten.

US 2010/041215 A1 und US 2010/040803 A1 offenbaren Vorrichtungen und Verfahren zur Abscheidung von polykristallinem Silicium auf Dünnstäben mit einem metallischen Kern und Trennschichten (aus Siliciumverbindungen) an der Kernoberfläche. Die Trennschichten sind vorhanden, um eine Verunreinigung des abgeschiedenen Siliciums zu verhindern. Ein Vorheizen der Dünnstäbe wie im Stand der Technik bei Dünnstäben aus Silicium ist nicht erforderlich, da der metallische Kern der Dünnstäbe elektrisch von Raumtemperatur bis zur gewünschten Temperatur, bei der sich Silicium abscheidet, aufgeheizt werden kann. Die Heizelemente bzw. Dünnstäbe sind getrennt regelbar.

Aus dieser Problematik ergab sich die Aufgabenstellung der vorliegenden Erfindung.

Die Aufgabe wird gelöst durch ein Vorrichtung zur Temperaturbehandlung von korrosiven Gasen in einem Reaktor zur Konvertierung von Siliciumtetrachlorid mit Wasserstoff zu Trichlorsilan, umfassend eine Kammer zum Aufheizen von Gasen, in der sich wenigstens vier Heizelemente oder vier Gruppen von Heizelementen aus einem elektrisch leitfähigen Material befinden, wobei jedes Heizelement oder jede Gruppe von Heizelementen an ein separat regel- und/oder steuerbares Teilsystem eines elektrischen Energienetzes angeschlossen ist und dabei durch direkten Stromdurchgang beheizbar ist, wobei jedes getrennt regel- und/oder steuerbare Heizelement oder jede getrennt regel- und/oder steuerbare Gruppe von Heizelementen auf mindestens einen entweder gleichen oder abweichenden Wert eines Parameters aus der Gruppe bestehend aus Temperatur, Heizleistung, Strom, Spannung, Widerstand des Heizelementes steuer- oder regelbar ist, wobei wenigstens vier regel- und/oder steuerbare Teilsysteme galvanisch gegen Erde und galvanisch gegeneinander isoliert sind, wobei jedes galvanisch getrennte regel- und/oder steuerbare Teilsystem des elektrischen Energienetzes jeweils mit einem separaten System zur Erdschlussüberwachung verbunden ist.

Ebenso wird die Aufgabe gelöst durch ein Verfahren zur Temperaturbehandlung von korrosiven Gasen in einem Reaktor zur Konvertierung von Siliciumtetrachlorid mit Wasserstoff zu Trichlorsilan, wobei in einer Kammer befindliche Gase durch wenigstens vier Heizelemente oder vier Gruppen von Heizelementen aus einem elektrisch leitfähigen Material aufgeheizt werden, wobei jedes Heizelement oder jede Gruppe von Heizelementen an ein separat regel- und/oder steuerbares Teilsystem eines elektrischen Energienetzes angeschlossen ist, wobei jedes Heizelement oder jede Gruppe von Heizelementen separat geregelt und/oder gesteuert wird und dabei durch direkten Stromdurchgang beheizt wird, wobei jedes getrennt regel- und/oder steuerbare Heizelement oder jede getrennt regel- und/oder steuerbare Gruppe von Heizelementen auf mindestens einen entweder gleichen oder abweichenden Wert eines Parameters aus der Gruppe Temperatur, Heizleistung, Strom, Spannung, Widerstand des Heizelementes gesteuert bzw. geregelt wird, wobei wenigstens vier regel- und/oder steuerbare Teilsysteme galvanisch gegen Erde und galvanisch gegeneinander isoliert sind, wobei alle galvanisch getrennten Teilsysteme des elektrischen Energienetzes separat auf etwaige Erdschlüsse überwacht werden.

Die einzelnen Heizelementgruppen mit ihren jeweiligen Strom- bzw. Elektrodenanschlüssen stellen galvanisch getrennte Teilsysteme der gesamten Anordnung mit jeweils separater Stromversorgung dar.

Vorzugsweise ist das elektrische Energienetz auch gegen andere mit dem Reaktor zusammenwirkende Versorgungsnetze isoliert.

Die Elektroden der Stromversorgung weisen üblicherweise eine isolierende Dichtung auf.
Vorzugsweise wird die Betriebsspannung der Heizelemente jeweils möglichst niedrig gehalten, um die Wahrscheinlichkeit für die Dichtung schädigende Ströme möglichst gering zu halten.

Vorzugsweise werden die Heizelemente durch zeitversetztes Beschichten mit SiC, Si oder C während des Betriebes ohne Produktionsunterbrechung bei konstanter Reaktorleistung geschützt oder repariert. Dies erfolgt bevorzugt bei konstanter Reaktorheizleistung und/oder ohne Erhöhung der Gesamtreaktortemperatur, so dass kein chemischer Angriff in anderen Reaktorzonen erfolgt.

Vorzugsweise wird die Temperatur der Heizelemente ständig variiert.

Vorzugsweise werden die Heizelemente dadurch geschützt, dass die im Bezug auf die Heizerkorrosion kritischen Heizertemperaturen, welche auch noch abhängig von den übrigen Prozessparametern sind, nach Möglichkeit vermieden werden.

Dazu kann beispielsweise vorgesehen sein, Temperaturen von einem Teil der Heizelemente abzusenken oder anzuheben. Damit wird es möglich, den Bereich des maximalen chemischen Angriffs zu meiden.

Vorzugsweise werden durch die separat geregelten Heizelemente unterschiedliche Temperaturzonen in der Behandlungskammer realisiert oder auch ungewollte Temperaturunterschiede ausgeglichen.

Vorzugsweise ist die Schaltungsanordnung in Drehstromanordnung ausgeführt.

Dadurch wird der Stromoberschwingungsgehalt möglichst gering gehalten (alle durch 3 teilbaren Oberschwingungen).

Vorzugsweise liegen die Teilsysteme auf zwei um 30° phasenverschobenen Drehstromsystemen, um Netzrückwirkungen durch Stromoberschwingungen(5-te, 7-te) zu verringern.

Vorzugsweise werden zur Spannungs- bzw. Stromregelung handelsübliche Spannungs-/Stromregelgeräte für Gleichstrom-, Wechselstrom und jegliche Drehstromformen verwendet, wie z.B. Wechselstromsteller, Spannungsumrichter, Drehtransformatoren, Transduktoren usw.

Vorzugsweise werden die unterschiedlichen Teilsysteme im Phasenanschnitt mit Heizern unterschiedlicher Widerstände betrieben, um bei gleicher Heizleistung pro Heizelement unterschiedliche Thyristorsteuerwinkel zu erhalten und damit die höherfrequenten Netzrückwirkungen (> 13.te) zu reduzieren.

Vorzugsweise wird die Schaltungsanordnung mit einer Grundschwingungskompensationsanlage oder einer Oberschwingungskompensationsanlage betrieben, um den Leistungsfaktor zu optimieren.

Vorzugsweise werden die einzelnen Teilsysteme in Wellenpaket- oder Phasenanschnittsteuerung betrieben.

Besonders bevorzugt ist der Betrieb mit Stellern in Wellenpaketsteuerung, die zeitlich aufeinander abgestimmt sind.

Bevorzugt ist auch der Betrieb der einzelnen Teilsysteme mit Sinusspannungsreglern, welche auch primärseitig sinusförmigen Strom ohne Stromoberschwingungen aufnehmen.

Vorzugsweise sind alle Spannungs-/Stromregler so angeordnet, dass sie während des Betriebes des übrigen Systems ausgetauscht werden können.

Vorzugsweise sind die Spannungs-/Stromregler kurzschlussfest und leerlauffest ausgeführt.

Vorzugsweise sind die Spannungs-/Stromregler mit einer Strombegrenzung versehen.

Zur Erhöhung der Heizelementlebensdauer werden die Heizelemente bevorzugt in möglichst viele getrennt steuer und/oder regelbare und auch abschaltbare Einheiten unterteilt.

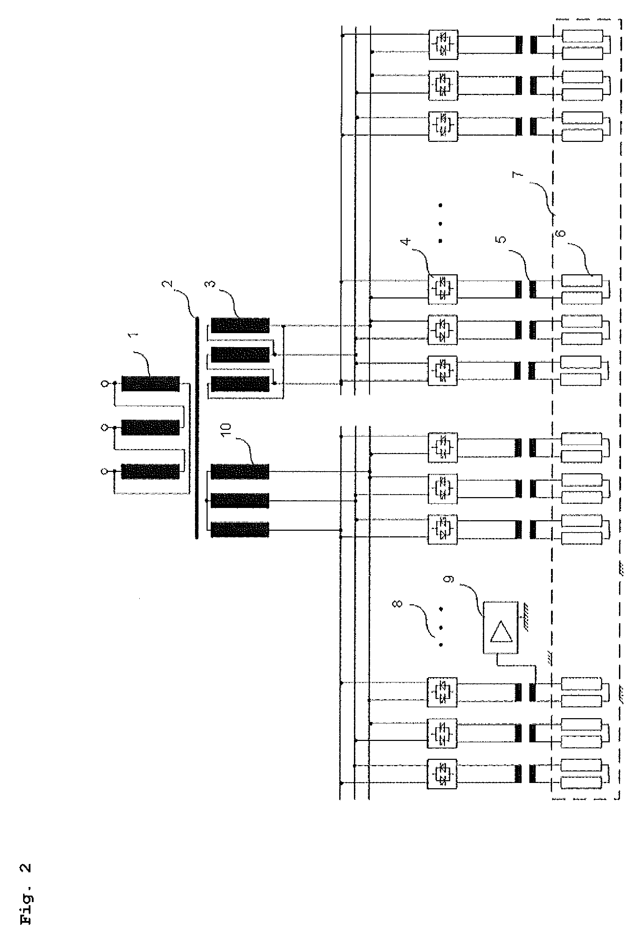

Fig. 2 zeigt eine entsprechende Schaltungsanordnung für eine erfindungsgemäße Vorrichtung.

Die Teilsysteme sind nicht nur getrennt abschalt-, steuer- und/oder regelbar, sondern zusätzlich elektrisch potentialgetrennt 5 angeordnet.

Die Zahl 8 der Heizelemente ist idealer weise durch sechs teilbar, also z.B. 6, 12, 18, 24, 36 Heizelemente.

Es ist aber auch eine davon verschiedene Zahl an Heizelementen denkbar.

Durch die Aufteilung der Heizelemente auf viele elektrische Energieregel- oder -steuergeräte **4** ist es möglich, die Heizenergie für jedes Heizelement getrennt vorzugeben und damit auf die Materialdaten der einzelnen Elemente und die Temperaturdaten der einzelnen Heizelementpositionen innerhalb des Reaktors abzustimmen.

Bei den Energieregel- oder Energiesteuergeräten 4 handelt es sich wie zuvor bereits erwähnt vorzugsweise um elektrische Leistungsteller, Spannungsumrichter oder Stelltransformatoren.

Falls es zu einem Heizerbruch kommt, führt dies im erfindungsgemäßen Verfahren nicht zu einem kompletten Reaktorausfall, sondern nur zum Wegfall eines kleinen Teils der Heizenergie. Diese kann durch geringfügige Erhöhung der Leistung der noch verbliebenen Heizelemente oder Gruppen von Heizelementen ausgeglichen werden.

Es können zur Reaktorbetriebsdauerverlängerung auch Reserveheizelemente zugeschaltet werden.

Darüber hinaus ist durch eine kontinuierliche Heizelementwiderstandsberechnung auch eine kontinuierliche Reaktion auf Widerstandsänderungen durch Korrosion bzw. Methanisierung der Heizelemente möglich.

Zu heiße Heizelemente können durch Reduzierung der effektiven Versorgungsspannung abgekühlt, zu kalte durch Erhöhung dieser Spannung aufgeheizt werden.

Temperaturunterschiede im Reaktor infolge von ungleichen Gasgeschwindigkeiten im Reaktor, ungleichen Widerständen der Heizelemente oder verursacht durch die Reaktorgeometrie können somit ausgeglichen werden.

Ein besonderer Vorteil dieser vielfach potenzialgetrennten Anordnung besteht darin, dass es möglich ist, für jedes elektrische Teilsystem **5** bzw. **6** eine eigene Erdschlusserkennungsschaltung **9** zu installieren.

Dies führt dazu, dass bei einem Erdschluss nur das jeweilige Teilsystem abgeschaltet werden muss.

Erdschlüsse führen also nicht mehr wie im Stand der Technik zu einer Komplettabschaltung des Reaktors, sondern nur eines geringen Teils, nämlich eines Heizelementes **6** mit zugehörigem Trenntransformator **5** und Stellglied bzw. Regelung **4**).

Ein weiterer Vorteil ist die Möglichkeit weitgehend handelsübliche Komponenten wie Leistungssteller 4 und Trenntransformatoren **5** für die Stromversorgungsanlage einzusetzen.

Durch die erfindungsgemäße vielfache Trennung in viele kleine Teilsysteme sinkt die notwendige Spannung am einzelnen Teilsystem im Vergleich zu einer langen Serienschaltung. Dadurch sinkt die Wahrscheinlichkeit, dass es im Reaktor verschmutzungsbedingt zu Schäden an der Elektrodendichtung oder Elektrodenisolierung ausgelöst durch elektrischen Strom von der Elektrode zur Reaktorwand kommt.

Im Falle eines solchen Ereignisses könnte es bei Versagen der Erdschlusserkennung zu Lichtbögen gegen die Reaktorwand kommen, welche die Elektrode die Dichtung oder die Wand beschädigen können.

Ein Versagen der Druckhülle und gefährlicher Gasaustritt wäre die Folge.

Auch durch die vielfache Potentialtrennung sinkt die Wahrscheinlichkeit, dass es im Reaktor zu elektrodendichtungs- oder elektrodenisolierungsschädigenden, elektrischen Strömen von der Elektrode zur Reaktorwand kommt.

Bei einem einfachen Erdschluss fließt kein Strom mehr gegen Erde, weil der Stromkreis nicht geschlossen ist.

Durch die vielen galvanisch getrennten Teilsysteme kann es auch nicht mehr zwischen allen Elektroden einer Phase zu allen Elektroden einer anderen Phase zu einem energiereichen Kurzschluss kommen, sondern nur noch zwischen zwei Elektroden eines Teilsystems.

Durch die Aufspaltung der gesamten Stromversorgungsenergie in viele kleine Stromversorgungssysteme wird auch die im Fehlerfall (Lichtbogen) mögliche Energie entsprechend geteilt, was das Schadensausmaß im Doppelfehlerfall entsprechend der Teilsystemanzahl aufteilt.

Der Kurzschlussstrom im Fehlerfall wird deutlich reduziert.

Die Aufteilung in viele elektrische Teilsysteme bringt noch weitere technische Vorteile.

Üblicherweise werden als Stellglied zur Einstellung der elektrischen Energie handelsübliche Leistungssteller 4 mit zwei antiparallel angeordneten Thyristorhalbleitern verwendet.

Diese Leistungssteller können normalerweise in zwei unterschiedlichen Betriebsmodi betrieben werden.

Modus A ist die Phasenanschnittsteuerung. Modus B ist die Wellenpaketsteuerung.

In beiden Modi sind Anordnungen zur Reduzierung der elektrischen Netzrückwirkungen möglich.

In der Phasenanschnittsteuerung können die vielen Teilsysteme auf zwei (**3** und **10** in **Fig. 2**) um 30° phasenverschobene Drehstromsysteme eines Primärtransformators aufgeteilt werden.

Auf diese Weise löschen sich rein rechnerisch auf der Primärseite des Einspeisetransformators 1,2,3 Fig. 1 die amplitudenstärksten, höherfrequenten (größer Grundschwingung) Stromharmonischen aus, die bei Stellern im Phasenanschnittbetrieb auftreten.

Durch eine Drehstrom 3-Wickleranordnung des Primärtransformators lassen sich dadurch die 3., 5. und 7. Stromoberschwingungen weitgehend eliminieren,

Im Modus Wellenpaketsteuerung kann man die Wellenpakete zeitlich so aufeinander abstimmen, dass es im Pulsbetrieb nicht zu den üblichen Laststößen auf das Netz kommt, sondern die elektrische Gesamtreaktorleistung zeitlich gleichmäßiger verteilt aufgenommen wird.

Durch die Aufteilung der Energie auf die verschiedenen Teilsysteme, ist zwar aufgrund der höheren Anzahl die Wahrscheinlichkeit erhöht, dass ein Fehler eines Leistungsstellers zu einem Ausfall führt.

Dieser wirkt sich aber nur auf ein Teilsystem aus, und es fällt nicht die gesamte Heizung aus wie im Stand der Technik.

Ein kompletter Anlagenstillstand wird also verhindert.

Darüber hinaus können die Geräte so angeordnet werden, dass man sie während des Betriebes der anderen Systeme reparieren oder austauschen kann.

Ein übergeordneter Reaktortemperaturregler sorgt dafür, dass im Falle eines Ausfalles eines Teilsystems alle anderen Systeme entsprechen in der Leistung erhöht werden.

Dadurch ergibt sich keine Störung des Betriebszustandes.

Wenn das Teilssystem nach Reparatur wieder zugeschaltet wird, regelt der übergeordnete Regler die Leistung für die übrigen Heizelemente automatisch wieder nach unten.

Darüber hinaus ist es in Verbindung mit der Aufteilung der Heizenergie auf viele Heizelemente bevorzugt, weiteren Schutz der Heizelemente vorzusehen.

Besonders bevorzugt ist ein Schutz der Heizelemente durch chemisch beständige Schichten, wie z.B. Si oder SiC.

Durch die getrennt voneinander regel- bzw. steuerbare Leistung der einzelnen Heizelemente kann die Temperatur des einzelnen Heizelements erhöht werden, während die Reaktortemperatur konstant gehalten wird, indem die restlichen Heizelemente in ihrer Leistung zurückgenommen werden. SiC, Si bzw. C scheidet sich bevorzugt an heißen Oberflächen, also bevorzugt auf dem heißesten Heizer ab. Dadurch, dass die Reaktortemperatur insgesamt konstant gehalten werden kann, wird der Angriff durch Methanisierung anderer Bauteile wie Umlenkungen oder Wärmetauscher vermieden. Ebenso wird auch eine willkürliche Abscheidung auf anderen Bauteilen vermieden.

Durch die Beschichtung bzw. Reparatur der Heizelemente während des Betriebs des Reaktors kann die Lebensdauer der Heizer verlängert werden. Aufgrund der längeren Lebensdauer der Heizer steigt die Verfügbarkeit des Reaktors und mit der Verfügbarkeit auch die Jahresproduktionsmenge an Trichlorsilan.

Das Aufbringen von Si- bzw. SiC-Schichten vor oder während des Betriebes ist möglich durch die Zugabe von Silicium enthaltenden Gasen wie z.B. Dichlorsilan oder Monosilan, aber auch bereits durch die bei der Konvertierung von Siliciumtetrachlorid ohnehin vorhandenen Prozessgas wie Trichlorsilan.

In den Eduktgasen der Konvertierung ist kein Kohlenstoff enthalten. SiC bildet sich im Falle von Graphit-Heizelementen aus dem Kohlenstoff der Heizelemente selbst. An den Oberflächen der Heizelemente findet eine entsprechende Materialumwandlung statt.

Durch die Abscheidung von Si bzw. SiC kann der weitere chemische Angriff drastisch verlangsamt werden.

Durch Abscheidung von Silicium kann der elektrische Widerstand des Heizelementes in vorteilhafter Weise je nach Wunsch beeinflusst werden, da Si bei den üblicherweise hohen Temperaturen leitfähig ist.

Erfindungsgemäß kann dieses Verfahren nun an einzelnen Heizelementen durchgeführt werden, ohne den Gesamtenergieeintrag in den Reaktor zu verändern bzw. die Reaktortemperatur generell zu ändern, da jeweils mit dem zu beschichtenden Element die notwendige Temperatur angefahren werden kann und die übrigen Heizelemente so eingestellt werden, dass sich die Gesamtenergie nicht ändert, die Gesamtreaktortemperatur also konstant bleibt.

Auf diese Weise kann das einzelne Heizelement geschützt werden, ohne den Sollbetriebspunkt für den übrigen Reaktor zu verlassen. Dieser kann übergeordnet vorgegeben werden.

Auf diese Weise können die einzelnen Heizelemente nacheinander beschichtet werden, ohne den Zielbetriebspunkt für die eigentliche Reaktion zu verlassen.

Die Temperaturänderung des Heizelementes bei der Änderung der Prozessparameter kann dann aus der Widerstandsänderung (berechnet aus einer kontinuierlichen Strom- und Spannungsmessung je Heizelement) abgeleitet werden.

Hierzu wird der physikalische Effekt genutzt, dass sich der spezifische Widerstand von ohmschen Widerständen in Abhängigkeit von der Temperatur ändert.

Eine weitere Möglichkeit zum Schutz bzw. der Heilung von bereits geschädigten kohlenstoffhaltigen Heizelementen ist die aktive Kohlenstoffabscheidung.

Dies erfolgt vorzugsweise durch gezielte Einbringung einer Kohlenstoffquelle, im folgenden Opferkohlenstoffkörper bezeichnet.

Durch die Einbringung eines Opferkohlenstoffkörpers an kälteren Stellen der Reaktorkammer wird der Kohlenstoff dort unter Wasserstoffatmosphäre (wie sie bei Konvertierung vorliegt) zu Methan umgesetzt und scheidet sich an den heißen Stellen (bevorzugt über 1.000°C) z.B. an einem einzelnen Heizelement wieder ab.

Auch dieser Prozess kann erfindungsgemäß während des Betriebs nacheinander (oder auch nur bei geschädigten Heizern) für jedes Heizelement unabhängig durchgeführt werden.

Gleiches gilt bei der Verwendung interner Reaktor-Einbauten als Kohlenstoffquelle, falls diese Kohlenstoffhaltig sind.

Als Kohlenstoffquelle können auch kohlenstoffhaltige Gase fungieren, die gezielt zusätzlich in den Reaktor eingespeist werden, wie z.B. Methan oder andere Kohlenwasserstoffe.

Der erfolgreiche Einsatz eines Opferkohlenstoffkörpers, von internen Reaktor-Einbauten als Kohlenstoffquelle bzw. von Methangas zu diesem Zweck basiert darauf, dass entsprechend des thermodynamischen Gleichgewichts bei steigenden Temperaturen der Methanpartialdruck in einer Wasserstoffatmosphäre sinkt. Aus diesem Grund wird Kohlenstoff an heißen Oberflächen abgeschieden.

Durch Kombination von Si enthaltenden Gasen und einer zusätzlichen Kohlenstoffquelle, wie z.B. Methangas, ist auch eine Abscheidung einer SiC-Schicht auf einem einzelnen Heizelement, wenn dieses bezüglich seiner Temperatur entsprechend hoch (bevorzugt größer 1.200°C, besonders bevorzugt größer 1.500°C) geregelt wird, möglich.

Eine weitere Ausführungsform sieht eine ständige Variation der Heizelementtemperatur bei konstanter Reaktortemperatur vor.

Da sich der chemische Angriff auf die kohlenstoffhaltigen Heizelemente in ganz spezifischen Temperaturbereichen (zwischen 700-1700 °C) und abhängig von Druck (0-30 barü) und Reaktionsgaszusammensetzung (Monosilan, Disilan, Trichlorsilan, Siliciumtetrachlorid, Wasserstoff, Chlor, Chlorwasserstoffsäure, Methan usw.) abspielen, ist es gut, gewisse Temperaturbereiche in denen der Angriff am höchsten ist, zu meiden oder schnell zu durchfahren.

Sofern dies nicht anders möglich ist, kann dies durch die ständige Veränderung der Heizelementtemperatur erreicht werden, ohne die Temperatur für den übrigen Reaktor zu ändern.

Die folgenden Beispiele erläutern das erfindungsgemäße Verfahren und die erfindungsgemäße Vorrichtung näher, ohne die Erfindung auf diese Beispiele zu beschränken.

### Beispiel 1 (Beispiel nach Stand der Technik)

Es wurde ein herkömmlicher Reaktor, wie z.B. in DE 3024320 A1 beschrieben, mit einer Reaktionskammer und mit einer Gaseinlassöffnung und mit einer Gasauslassöffnung verwendet. Zur Vereinfachung des Aufbaus wurden keine Wärmetauschereinheiten innerhalb der Reaktorhülle verwendet. In einem externen Wärmetauscher wurde Siliciumtetrachlorid mit einem Massenstrom von 30 kg/min verdampft und mit bereits auf ca. 80°C vorgewärmten Wasserstoff mit einem Massenstrom von 0,712 kg/min in einem statischen Mischer vermischt. Anschließend wurde das Gasgemisch bestehend aus Siliciumtetrachlorid und Wasserstoff mit einer Temperatur von 132°C über die Gaseinlassöffnung des Reaktors in die Reaktionskammer eingespeist. Der Betriebsdruck des Reaktors lag bei 20 barü.

Die Beheizung des Reaktors erfolgte nach DE 3024320 A1. Für dieses Beispiel wurden 6 Heizelemente verwendet. Jeweils 2 Heizelemente bildeten eine Gruppe. Die Heizelemente bestanden aus Graphit und hatten einen sternförmigen Querschnitt. Der Querschnitt und die Länge des Heizelements waren mit der Stromversorgung und dem vorhandenen Reaktor abgestimmt. Die Heizergeometrie wurde außerdem so ausgewählt, dass der Heizer im Betrieb eine Temperatur von ca. 1200°C erreicht. Diese Temperatur ist so hoch, dass die Bildung von SiC an der Heizeroberfläche in ausreichender Geschwindigkeit zum Schutz des Heizers stattfindet, aber noch kein Problem für die Elektrodendurchführung darstellt.

Um einen nennenswerten Umsatz von Siliciumtetrachlorid zu Trichlorsilan zu erhalten, mussten die Heizer das Gasgemisch auf 1.000°C aufheizen. Durch eine höhere Reaktionstemperatur würden die Umlenkungen und Wärmeisolationen, die aus einem kohlenstoff-basiertem Material bestehen, durch Methanisierung zu stark angegriffen.

Es haben sich die nachfolgend aufgeführten Heizertemperaturen eingestellt, wobei darauf geachtet wurde, dass die Heizelementgruppen in etwa gleich belastet wurden. Dies ist möglich, da nach dem Stand der Technik die Phasen einzeln regelbar sind.

**Tabelle 1** zeigt die Temperaturen der Heizelemente.

**Tabelle 1**

| | | |
|---|---|---|
| Phase 1 | Heizelement A | 1120 °C |
| | Heizelement B | 1270 °C |
| Phase 2 | Heizelement A | 1207 °C |
| | Heizelement B | 1220 °C |
| Phase 3 | Heizelement A | 1205 °C |
| | Heizelement B | 1220 °C |

Hierbei zeigt sich auch das Problem dieser Regelung: Das Heizelement A der Phase 1 hat eine Temperatur von 1120°C. Bei dieser Temperatur unterliegt der Heizer einem starken chemischen Angriff durch Methanisierung. Die Abscheidung von SiC fand aufgrund der geringen Temperatur nur äußerst langsam statt. Die anderen Heizelemente werden durch die Bildung einer SiC-Schicht, die über 1200°C mit einer ausreichend hohen Geschwindigkeit gebildet wird, geschützt.

Die Laufzeit des Reaktors wurde begrenzt durch die Laufzeit dieses Heizelements. Zur Vereinfachung wird die erzielte Laufzeit mit 100% angegeben.

Die unterschiedlichen Temperaturen der Heizelemente wurden durch natürliche Schwankungen im Widerstand der Heizelemente verursacht. Maßtoleranzen, unterschiedlich gute Kontaktierung der Heizelemente und inhomogenes Material sind Ursachen dafür.

Die Laufzeit dieses Reaktors mit dieser beschriebenen Anordnung wurde auch 100 % normiert.

### Beispiel 2 (erfindungsgemäßes Beispiel)

Eine wesentliche Verbesserung wurde durch die Verwendung der erfindungsgemäßen Vorrichtung erreicht: Durch die getrennte Regelung aller 6 Heizelemente konnte die Temperatur aller Heizelemente auf 1.209°C eingestellt werden, so dass die Umwandlung von Silanen und Kohlenstoff zu SiC bei allen Heizern gleich schnell stattfinden konnte. Es gab daher keinen Heizer, der frühzeitig beschädigt wurde und aus diesem Grund der gesamte Reaktor ausfiel. Die Laufzeit des Reaktors konnte dadurch auf 137% erhöht werden.

Besonders vorteilhaft hat sich folgende Änderung herausgestellt: Aufgrund der getrennten Regelung der Heizelemente war es nun auch möglich, nur noch 5 Heizelemente in den Reaktor einzusetzen. Die Leistung, die von den 5 Heizelementen abgegeben wurden, musste der Leistung aus den vorhergehenden Beispielen entsprechen, da sich an den Randbedingungen des Betriebs, also Druck, Temperatur, Durchfluss, nichts geändert hat. Die Temperatur der einzeln regelbaren Heizelemente betrug 1.240°C. Die Bildung von SiC wurde daher noch weiter beschleunigt, was die Laufzeit des Reaktors auf 149% erhöhte.

Eine weitere Reduzierung der Anzahl an Heizelemente führte zu einer noch stärkeren Belastung der restlichen Heizelemente, was zu einem frühzeitigen Ausfall des Reaktors aufgrund von Beschädigungen der Elektrodenabdichtung führte.

### Beispiel 3 (erfindungsgemäßes Beispiel)

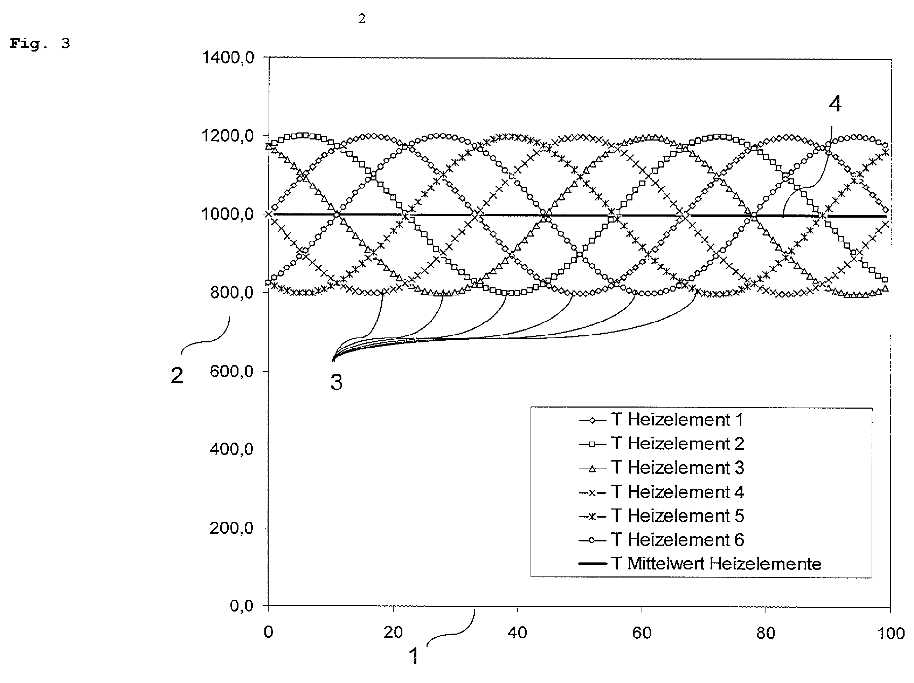

Es wurde eine zeitliche Variation der Temperatur der Heizelemente verwendet, die in **Fig. 3** dargestellt ist. Die X-Achse stellt die Zeitachse in Tagen dar. Die Y-Achse gibt die Temperatur in Grad Celsius an. Hier wurde ein Heizsystem mit sechs getrennt steuerbaren Heizelementen bei einer mittleren Heizelementtemperatur **4** von 1000°C betrieben. Durch die zeitversetzt sinusförmig gesteuerte Heizelementtemperaturen **3** ergibt sich eine konstante Reaktortemperatur von 850°C, obwohl die Temperaturen der einzelnen Heizelemente **3** ständig variieren.

Auf diese Weise wurde offenbar der besonders schädliche Temperaturpunkt von 1000°C für die Heizer gemieden, gleichzeitig aber der Gesamtreaktor bei der Wunschtemperatur 850°C betrieben werden und es entstanden keine lokalen Schadstellen bzw. die Lebensdauer der Heizelemente wurde deutlich erhöht.

Als besonders vorteilhaft, erwies es sich, die Periodendauer zwischen 10h und 10000h zu wählen. Der größte Effekt ist bei einer Periodendauer zwischen 100h und 2000h beobachtbar.

Derselbe Effekt kann auch mit anderen periodischen zeitabhängigen Funktionen erreicht werden wie zum Beispiel Kosinus, Rechteck, Dreieck, Trapez, Sägezahn.

### Beispiel 4 (erfindungsgemäßes Beispiel)

Im Unterschied zu **Beispiel 3** wurde eine nichtperiodische Funktion (stetiger Energieanstieg und -abfall einzelner Heizelemente bei konstanter Gesamtleistung) verwendet. Überaschenderweise wurde auch hier eine Lebensdauer verlängernde Wirkung auf die Heizelemente beobachtet.

## Patentansprüche

1. Vorrichtung zur Temperaturbehandlung von korrosiven Gasen in einem Reaktor zur Konvertierung von Siliciumtetrachlorid mit Wasserstoff zu Trichlorsilan, umfassend eine Kammer zum Aufheizen von Gasen, in der sich wenigstens vier Heizelemente oder vier Gruppen von Heizelementen aus einem elektrisch leitfähigen Material befinden, wobei jedes Heizelement oder jede Gruppe von Heizelementen an ein separat regel- und/oder steuerbares Teilsystem eines elektrischen Energienetzes angeschlossen ist und dabei durch direkten Stromdurchgang beheizbar ist, wobei jedes getrennt regel- und/oder steuerbare Heizelement oder jede getrennt regel- und/oder steuerbare Gruppe von Heizelementen auf mindestens einen entweder gleichen oder abweichenden Wert eines Parameters aus der Gruppe bestehend aus Temperatur, Heizleistung, Strom, Spannung, Widerstand des Heizelementes steuer- oder regelbar ist, wobei wenigstens vier regel- und/oder steuerbare Teilsysteme galvanisch gegen Erde und galvanisch gegeneinander isoliert sind, wobei jedes galvanisch getrennte regel- und/oder steuerbare Teilsystem des elektrischen Energienetzes jeweils mit einem separaten System zur Erdschlussüberwachung verbunden ist.

2. Vorrichtung nach Anspruch 1, wobei das elektrische Energienetz in Drehstromanordnung ausgeführt ist.

3. Vorrichtung nach einem der Ansprüche 1 oder 2, wobei jedes regel- und/oder steuerbare Teilsystem des elektrischen Energienetzes mit Strom- oder Spannungsreglern, ausgewählt aus der Gruppe bestehend aus Wechselstromstellern, Spannungsumrichtern, Drehtransformatoren und Transduktoren, verbunden ist.

4. Vorrichtung nach einem der Ansprüche 1 bis 3, wobei das elektrische Energienetz eine Grundschwingungskompensationsanlage oder eine Oberschwingungskompensationsanlage umfasst.

5. Verfahren zur Temperaturbehandlung von korrosiven Gasen in einem Reaktor zur Konvertierung von Siliciumtetrachlorid mit Wasserstoff zu Trichlorsilan, wobei in einer Kammer befindliche Gase durch wenigstens vier Heizelemente oder vier Gruppen von Heizelementen aus einem elektrisch leitfähigen Material aufgeheizt werden, wobei jedes Heizelement oder jede Gruppe von Heizelementen an ein separat regel- und/oder steuerbares Teilsystem eines elektrischen Energienetzes angeschlossen ist, wobei jedes Heizelement oder jede Gruppe von Heizelementen separat geregelt und/oder gesteuert wird und dabei durch direkten Stromdurchgang beheizt wird, wobei jedes getrennt regel- und/oder steuerbare Heizelement oder jede getrennt regel- und/oder steuerbare Gruppe von Heizelementen auf mindestens einen entweder gleichen oder abweichenden Wert eines Parameters aus der Gruppe Temperatur, Heizleistung, Strom, Spannung, Widerstand des Heizelementes gesteuert bzw. geregelt wird, wobei wenigstens vier regel- und/oder steuerbare Teilsysteme galvanisch gegen Erde und galvanisch gegeneinander isoliert sind, wobei alle galvanisch getrennten regel- und/oder steuerbare Teilsysteme des elektrischen Energienetzes separat auf etwaige Erdschlüsse überwacht werden.

6. Verfahren nach Anspruch 5, wobei jedes regel- und/oder steuerbare Teilsystem des elektrischen Energienetzes mit Strom- oder Spannungsreglern, vorzugsweise ausgewählt aus der Gruppe bestehend aus Wechselstromstellern, Spannungsumrichtern, Drehtransformatoren und Transduktoren, verbunden ist.

7. Verfahren nach einem der Ansprüche 5 oder 6, wobei die Heizelemente nacheinander bei einer konstanten Leistung des Reaktors in-situ mit einem Material ausgewählt aus der Gruppe bestehend aus SiC, Si und C, beschichtet werden.

8. Verfahren nach Anspruch 7, wobei während der Beschichtung keine Erhöhung der Gesamtreaktortemperatur erfolgt.

9. Verfahren nach einem der Ansprüche 5 bis 8, wobei die regel- und/oder steuerbaren Teilsysteme des elektrischen Energienetzes jeweils aus zwei um 30° phasenverschobenen Drehstromsystemen eines Primärtransformators versorgt werden.

10. Verfahren nach einem der Ansprüche 5 bis 9, wobei die regel- und/oder steuerbaren Teilsysteme des elektrischen Energienetzes im Phasenanschnitt mit Heizelementen, die unterschiedliche elektrische Widerstände aufweisen, betrieben werden.

11. Verfahren nach einem der Ansprüche 5 bis 10, wobei die regel- und/oder steuerbaren Teilsysteme des elektrischen Energienetzes jeweils in Wellenpaket- und/oder Phasenanschnittsteuerung betrieben werden.

12. Verfahren nach Anspruch 11, wobei der Betrieb mit Stellern in Wellenpaketsteuerung, die zeitlich aufeinander abgestimmt sind, erfolgt.

13. Verfahren nach einem der Ansprüche 5 bis 12, **dadurch gekennzeichnet, dass** ein zeitlicher Temperaturverlauf der Heizelemente eine Mindesttemperatur und eine Temperaturfunktion ausgewählt aus der Gruppe bestehend aus Rechteckfunktion, Dreieckfunktion, Sägezahnfunktion, Sinusfunktion, Kosinusfunktion, Trapezfunktion, umfasst.

14. Verfahren nach einem der Ansprüche 5 bis 13, **dadurch gekennzeichnet, dass** ein zeitlicher Temperaturverlauf der Heizelemente sowohl eine Mindesttemperatur als auch eine sich nicht periodisch ändernde Komponente enthält.

## Claims

1. Device for the thermal treatment of corrosive gases in a reactor for the conversion of silicon tetrachloride with hydrogen into trichlorosilane, comprising a chamber for heating gases in which there are at least four heating elements or four groups of heating elements consisting of an electrically conductive material, wherein each heating element or each group of heating elements is connected to a separately regulatable and/or controllable subsystem of an electrical energy network and can thereby be heated by direct current flow, wherein each separately regulatable and/or controllable heating element or each separately regulatable and/or controllable group of heating elements can be controlled or regulated with respect to at least one either identical or different value of a parameter in the group consisting of temperature, heating power, current, voltage, resistance of the heating element, wherein at least four regulatable and/or controllable subsystems are DC-isolated from ground potential and DC-isolated from one another, wherein each DC-separated regulatable and/or controllable subsystem of the electrical energy network is respectively connected to a separate system for ground fault monitoring.

2. Device according to Claim 1, wherein the electrical energy network is configured in three-phase arrangement.

3. Device according to either of Claims 1 and 2, wherein each regulatable and/or controllable subsystem of the electrical energy network is connected to current or voltage regulators selected from the group consisting of AC power controllers, voltage inverters, three-phase transformers and transducers.

4. Device according to one of Claims 1 to 3, wherein the electrical energy network comprises a fundamental compensation system or a harmonic compensation system.

5. Method for the thermal treatment of corrosive gases in a reactor for the conversion of silicon tetrachloride with hydrogen into trichlorosilane, wherein gases contained in a chamber are heated by at least four heating elements or four groups of heating elements consisting of an electrically conductive material, wherein each heating element or each group of heating elements is connected to a separately regulatable and/or controllable subsystem of an electrical energy network, wherein each heating element or each group of heating elements is regulated and/or controlled separately and is heated by direct current flow, wherein each separately regulatable and/or controllable heating element or each separately regulatable and/or controllable group of heating elements is controlled or regulated with respect to at least one either identical or different value of a parameter in the group consisting of temperature, heating power, current, voltage, resistance of the heating element, wherein at least four regulatable and/or controllable subsystems are DC-isolated from ground potential and DC-isolated from one another, wherein all DC-separated regulatable and/or controllable subsystems of the electrical energy network are monitored separately for any ground faults.

6. Method according to Claim 5, wherein each regulatable and/or controllable subsystem of the electrical energy network is connected to current or voltage regulators, preferably selected from the group consisting of AC power controllers, voltage inverters, three-phase transformers and transducers.

7. Method according to either of Claims 5 and 6, wherein the heating elements are successively coated in situ at a constant power of the reactor with a material selected from the group consisting of SiC, Si and C.

8. Method according to Claim 7, wherein no increase in the overall reactor temperature takes place during the coating.

9. Method according to one of Claims 5 to 8, wherein the regulatable and/or controllable subsystems of the electrical energy network are respectively supplied from two three-phase systems of a primary transformer, which are phase-shifted by 30°.

10. Method according to one of Claims 5 to 9, wherein the regulatable and/or controllable subsystems of the electrical energy network are operated in phase firing with heating elements which have different electrical resistances.

11. Method according to one of Claims 5 to 10, wherein the regulatable and/or controllable subsystems of the electrical energy network are respectively operated in wave-packet and/or phase-firing control.

12. Method according to Claim 11, wherein operation is carried out in wave-packet control with controllers which are temporally matched to one another.

13. Method according to one of Claims 5 to 12, wherein a temperature profile of the heating elements as a function of time comprises a minimum temperature and a temperature function selected from the group consisting of squarewave function, triangle function, sawtooth function, sine function, cosine function and trapezium function.

14. Method according to one of Claims 5 to 13, wherein a temperature profile of the heating elements as a function of time contains both a minimum temperature and a non-periodically varying component.

## Revendications

1. Dispositif de traitement thermique de gaz corrosifs dans un réacteur pour convertir du tétrachlorure de silicium à l'aide d'hydrogène en trichlorosilane, comprenant une chambre destinée à chauffer des gaz dans laquelle se trouvent quatre éléments chauffants ou quatre groupes d'éléments chauffants constitués d'un matériau électriquement conducteur, dans lequel chaque élément chauffant ou chaque groupe d'éléments chauffants est raccordé à un système partiel pouvant être régulé et/ou commandé séparément d'un réseau d'énergie électrique et peut ainsi être chauffé par le passage direct d'un courant, dans lequel chaque élément chauffant pouvant être régulé et/ou commandé séparément ou chaque groupe d'éléments chauffants pouvant être régulé et/ou commandé séparément peut être régulé ou commandé à au moins une valeur, soit identique soit différente, d'un paramètre sélectionné dans le groupe comprenant la température, la puissance de chauffage, le courant, la tension, la résistance de l'élément chauffant, dans lequel au moins quatre systèmes partiels pouvant être régulés et/ou commandés sont isolés de manière galvanique par rapport à la terre et de manière galvanique les uns par rapport aux autres, dans lequel chaque système partiel pouvant être régulé et/ou commandé séparément de manière galvanique du réseau d'énergie électrique est respectivement connecté à un système séparé pour la surveillance de mise à la terre.

2. Dispositif selon la revendication 1, dans lequel le réseau d'énergie électrique est réalisé en configuration à courant polyphasé.

3. Dispositif selon l'une des revendications 1 ou 2, dans lequel chaque système partiel pouvant être régulé et/ou commandé du réseau d'énergie électrique est connecté à des régulateurs de courant ou de tension sélectionnés dans le groupe comprenant des régulateurs de courant alternatif, des onduleurs de tension, des transformateurs polyphasés et des transducteurs.

4. Dispositif selon l'une quelconque des revendications 1 à 3, dans lequel le réseau d'énergie électrique comprend une installation de compensation d'oscillations fondamentales ou une installation de compensation d'harmoniques.

5. Procédé de traitement thermique de gaz corrosifs dans un réacteur pour convertir du tétrachlorure de silicium à l'aide d'hydrogène en trichlorosilane, dans lequel des gaz se trouvant dans une chambre sont chauffés par au moins quatre éléments chauffants ou quatre groupes d'éléments chauffants constitués d'un matériau électriquement conducteur, dans lequel chaque élément chauffant ou chaque groupe d'éléments chauffants est raccordé à un système partiel pouvant être régulé et/ou commandé séparément d'un réseau d'énergie électrique, dans lequel chaque élément chauffant ou chaque groupe d'éléments chauffants est régulé et/ou commandé et est ainsi chauffé par passage direct d'un courant, dans lequel chaque élément chauffant pouvant être régulé et/ou commandé séparément ou chaque groupe d'éléments chauffants pouvant être régulé et/ou commandé séparément est régulé ou commandé à au moins une valeur, soit identique soit différente, d'un paramètre sélectionné dans le groupe comprenant la température, la puissance de chauffage, le courant, la tension, la résistance de l'élément chauffant, dans lequel au moins quatre systèmes partiels pouvant être régulés et/ou commandés sont isolés de manière galvanique par rapport à la terre et de manière galvanique les uns par rapport aux autres, dans lequel tous les systèmes partiels pouvant être régulés et/ou commandés séparément de manière galvanique du réseau d'énergie électrique sont surveillés séparément en ce qui concerne les éventuelles mises à la terre.

6. Procédé selon la revendication 5, dans lequel chaque système partiel pouvant être régulé et/ou commandé du réseau d'énergie électrique est connecté à des régulateurs de courant ou de tension, de préférence sélectionnés dans le groupe comprenant des régulateurs de courant alternatif, des onduleurs de tension, des transformateurs polyphasés et des transducteurs.

7. Procédé selon l'une quelconque des revendications 5 ou 6, dans lequel, pour une puissance constante du réacteur, les éléments chauffants sont revêtus l'un après l'autre in situ d'un matériau sélectionné dans le groupe comprenant le SiC, le Si et le C.

8. Procédé selon la revendication 7, dans lequel il ne se produit aucune augmentation de la température de l'ensemble du réacteur pendant l'application du revêtement.

9. Procédé selon l'une quelconque des revendications 5 à 8, dans lequel les systèmes partiels pouvant être régulés et/ou commandés du réseau d'énergie électrique sont respectivement alimentés à partir de deux systèmes de courant polyphasés déphasés de 30° d'un transformateur primaire.

10. Procédé selon l'une quelconque des revendications 5 à 9, dans lequel les systèmes partiels pouvant être régulés et/ou commandés du réseau d'énergie électrique sont attaqués en découpage de phase avec des éléments chauffants qui présentent des résistances électriques différentes.

11. Procédé selon l'une quelconque des revendications 5 à 10, dans lequel les systèmes partiels pouvant être régulés et/ou commandés du réseau d'énergie électrique sont respectivement attaqués par une commande à paquets d'ondes et/ou à découpage de phase.

12. Procédé selon la revendication 11, dans lequel l'attaque est effectuée dans la commande de paquet d'ondes au moyen de régulateurs qui sont coordonnés temporellement les uns avec les autres.

13. Procédé selon l'une quelconque des revendications 5 à 12, **caractérisé en ce qu'**une courbe temporelle de température des éléments chauffants comprend une température minimale et une fonction de température sélectionnée dans le groupe comprenant une fonction rectangulaire, une fonction triangulaire, une fonction en dents de scie, une fonction sinus, une fonction cosinus, une fonction trapézoïdale.

14. Procédé selon l'une quelconque des revendications 5 à 13, **caractérisé en ce qu'**une courbe temporelle de température des éléments chauffants comporte une température minimale ainsi qu'une composante ne variant pas périodiquement.
